# EUROPEAN PATENT SPECIFICATION

(11) **EP 3 522 012 B1**
(45) Date of publication and mention of the grant of the patent: **06.10.2021**
(21) Application number: 17915974.4
(22) Date of filing: 19.07.2017
(51) Int. Cl.: G06F 9/445, G03G 15/08, B41J 2/175, G06F 3/12, G06F 21/10

(54) **CONSUMABLE CHIP DATA REWRITING DEVICE**
VERBRAUCHBARE CHIP-DATENWIEDERBESCHREIBUNGSVORRICHTUNG
DISPOSITIF DE RÉÉCRITURE DE DONNÉES DE PUCE CONSOMMABLE

(30) Priority: 30.06.2017 CN 201720783507 U
(43) Date of publication of application: 07.08.2019
(73) Proprietor: Hangzhou Chipjet Technology Co., Ltd., Hangzhou, Zhejiang 310012 (CN)
(72) Inventor: CHEN, Tao, Hangzhou Zhejiang 310012 (CN); WANG, Min, Hangzhou Zhejiang 310012 (CN); GU, Haining, Hangzhou Zhejiang 310012 (CN)
(74) Representative: Köllner, Malte
(86) International application number: PCT/CN2017/093451
(87) International publication number: WO 2019/000509

(56) References cited:
- CN-A- 103 009 816
- CN-A- 103 009 816
- CN-A- 103 660 583
- CN-A- 103 660 583
- CN-A- 105 955 793
- CN-A- 105 955 793
- CN-U- 202 378 424
- CN-U- 206 201 689
- JP-A- 2003 152 919
- JP-A- 2004 098 564
- JP-A- 2006 350 067
- JP-A- 2010 097 617
- US-A1- 2009 058 958

## Description

### TECHNICAL FIELD

The present disclosure relates to a printing consumable chip device, especially relates to a consumable chip data rewriting device.

### BACKGROUND TECHNOLOGY

As a general imaging device, printer plays more and more important role in people's work and life. The printer uses imaging consumables (including cartridges, selenium drums, etc.) to form a pattern and image on a paper. The consumable chip configured to store the related information of the imaging materials (e.g. ink, carbon powder, etc.) is usually set on the consumable. The printer manufacturer would set a threshold for the capacity information of the imaging materials in the chip. In the process of printing, the printer records the current consumption of the consumables. When the consumption reaches the threshold, the printer will prompt the user to replace the consumable.

As a disposable product, the consumable will be discarded as useless after the capacity information of imaging materials stored in the consumable chip is consumed, resulting in a waste of resources. Thus, the consumable recycling industry is developed. The recycling process on the market includes: cleaning the consumable container after the old consumable is repurchased, filling the consumable container with imaging materials, and replacing the original chip with a compatible chip with new data. Most of the original chips, that have not been damaged and only run out of data, will be used as waste products, which is a secondary waste of resources.

The current consumable chip data rewriting device on the market, including: a main control chip configured for controlling the device, a consumable fixing structure configured for locating the consumable in need of reset, a probe configured for touching the consumable chip in need of reset, a position switch configured for determining whether the probe has touched the consumable chip in need of reset, a buzzer and a LED light configured for prompting the reset results of the chip, a LCD screen configured for displaying the reset state of the chip, a counter configured for recording the reset times of the chip, a key configured for selecting and conforming the type of the reset data of the chip, and a power supply.

The device in prior art has following disadvantages:
1. The LCD display screen has a single display mode, cannot display complete detected results, and can only display English letters.
2. The key has less stable use times, has short service life, and it is easy to cause mistouching.
3. The regeneration and reset program is programed in the memory solidified by the main control chip. After the device leaving the factory, the memory solidified by the main control chip cannot be read and written, causing the program is unchangeable, and the terminal user of the device cannot upgrade or update the program.
4. The reset times stored in the counter is unchangeable, the device is a disposable product for the terminal user, resource waste will be caused by discarding the device as useless, and the time cost of replacement or maintenance is too high.
5. The storage space is small.
6. The displacement action of the consumable fixing structure should be manually operated, the error rate in manual reset operation is high, and it is easy to cause low reset efficiency by invalided reset action or too long time reset action.
7. The liner power supply has a low conversion efficiency and low output power.

CN103660583A discloses a data rewriting device for a consumable chip. CN105955793A discloses automatic chip code writing and reading equipment. CN202378424U discloses an imaging cartridge chip and read-write interface module. CN206201689U discloses a refresh device based on thing networking printer supplies chip. JP2004098564A discloses a reutilization tool for used ink cartridge. CN103009816A discloses a consumable chip. JP2010097617A discloses a printer upgrade mechanism. JP2003152919A discloses a method and system for scanning image via internet receiver. JP2006350067A discloses coloring-agent-cartridge-using apparatus, coloring-agent-cartridge management unit, control method and control program of them, and coloring-agent-cartridge management system. However, an upgrade module which is configured for upgrading and rewriting the internal programs of the device, and the internal programs of the device comprising an user application program and an user authorized documents configured for storing a regeneration and reset times are not disclosed in either one.

### SUMMARY

In order to overcome the shortcoming of the prior art, the purpose of the present disclosure is to provide a consumable chip data rewriting device, so that the consumable can be regenerated and the chip can be reused.

The present disclosure provides a consumable chip data rewriting device, including: a main control box, a probe, and a consumable fixing structure; a display screen is embedded in the main control box; the main control box is internally provided with a main control module, a power module, a chip driving module, a display module, a storage module, an upgrade module, and an interface module; the main control module is respectively connected to and communicates with the power module, the chip driving module, the display module, the storage module, and the upgrade module via the interface module; the display screen is connected to the main control module via the display module; the power module supplies power to the main control module; the probe is connected to the main control module via the chip driving module; the storage module and the main control module perform two-way communication, and the storage module stores the data and internal programs of the rewriting device; the consumable fixing structure is configured for fixing the consumables; the probe is able to touch the consumable chip, and the main is configured for controlling module controls the chip driving module to perform data regenerating operation on the consumable chip with regeneration data. The regeneration date comprises consumables model numbers, consumables color, and consumables capacity. The consumable fixing structure comprises a sliding rail, a consumable fixing seat, and a a fixing seat driving structure; the sliding rail is installed on a base; the consumable fixing seat and the sliding rail are connected to each other in a sliding mode; and the main control box is connected to and fixed on the base. The fixing seat driving structure is electrically connected to the power module; and the fixing seat driving structure is configured to drive the consumable fixing seat to slide along the sliding rail, and enable the consumable chip directly touch the probe. The upgrade module and the main control module perform two-way communication. The upgrade module is configured for upgrading and rewriting the internal programs of the device, and the internal programs of the device comprises an user application program and an user authorized documents configured for storing a regeneration and reset times.

Furthermore, the display screen is a touch sensitive display screen.

Furthermore, a detection trigger switch is installed on the base; the detection trigger switch is electrically connected to the fixing seat driving structure; and the detection trigger switch controls the fixing seat driving structure to be started.

Furthermore, the fixing seat driving structure can include a step motor, a screw, and a screw nut; the screw is connected to the step motor; the screw nut matches the screw; the screw nut is connected to and fixed on the consumable fixing seat; and the step motor is configured to drive the consumable fixing seat to slide along the sliding rail.

Furthermore, the fixing seat driving structure can include a solenoid valve, an air cylinder, a gas pipe, and a solenoid valve switch; the solenoid valve and the solenoid valve switch are electrically connected to the power module; one end of the pipe is connected to the air cylinder, and the other end of the pipe is connected to the solenoid valve switch; the movable part of the air cylinder is connected to and fixed on the consumable fixing seat; the solenoid valve controls the solenoid valve switch to allow the gas get in or stop the gas getting in; and the movable part of the air cylinder drives the consumable fixing seat to slide along the sliding rail.

Furthermore, the base is a box-shaped structure; the base can include a hinge and a box fastener; and the fixing seat driving structure is installed in the box-shaped structure.

Furthermore, the interface module can include FSMC interface, SPI interface, GPIO interface, I2C interface, and USB interface.

Furthermore, the consumable chip data rewriting device can include a boot button, and a power connector; the power module is connected to an external power supply via the power connector; the boot button is electrically connected to the power module; and the boot button controls the circuit between the power module and the main control module to be connected or broken.

Furthermore, the consumable chip data rewriting device can include a speaker and an Ethernet module; the speaker is connected to and communicates with the main control module via the GPIO interface; the speaker is a buzzer; the main control module controls the buzzer to produce sound; and the Ethernet module is connected to and communicates with the main control module via the SPI interface.

Furthermore, the storage module can include EEPROM, RAM, external extended storage; the EEPROM is connected to and communicates with the main control module via the I2C interface; the RAM is connected to and communicates with the main control module via the FSMC interface; the display screen is a touch screen; the touch screen is connected to and communicates with the main control module via the FSMC interface.

Furthermore, the consumable chip data rewriting device can include an extended storage slot; the extended storage slot is used to connect the external extended storage; the extended storage slot is connected to and communicates with the main control module via the SPI interface; and the external extended storage can include SD card, TF card, U disk, and mobile hard disk.

Compared with prior art, the present disclosure has following advantages:
1. The touch sensitive display screen not only can display complete detected results, but also can make one operate the device, and also has many display modes;
2. Almost not using key operation, mis-operation caused by mistouching can be avoided effectively;
3. The user program and the bottom program are separately stored, after the device leaving the factory, it is realized that the terminal user of the device can self-upgrade and self-update the user program;
4. The authorized documents of the rewriting device can be amended by upgrading and updating, after the authorized times is invalided, the updated authorized documents can be obtained by purchasing the authorized times again, no need to replace the device, and the service life of the device is improved;
5. The storage space is large, and thousands of types of consumables authorized documents of many devices can be stored;
6. The consumable fixing structure does not requires manual operation, the error rate in reset operation is low, and the low reset efficiency, that caused by invalided reset action or too long time of the reset action, would not occur;
7. By using switching voltage regulator circuit, the power supply has a high conversion efficiency and high output power.

The above description is only an overview of the technologies of the present disclosure. In order to better understand the technical means of the present disclosure and to implement the technical means of the present disclosure according to the contents of the specification, the following is a detailed description with drawings of the prefer embodiments of the present disclosure. The specific embodiments of the present disclosure are given in detail by the following embodiments and the drawings.

### BRIEF DESCRIPTION OF THE DRAWINGS

The drawings here is used to further explain the present disclosure, and as a part of the application. The schematic embodiments of the present disclosure and the description are used to explain the present disclosure, and not as an improper limitation of the present disclosure. In the drawings:
FIG. 1 is a structural block diagram of a consumable chip data rewriting device of the present disclosure.
FIG. 2 is an internal module schematic diagram of a main control box of the present disclosure.
FIG. 3 is a schematic diagram of a main control MCU interface connection of the present disclosure.
FIG. 4 is a frontal structural schematic diagram of a consumable chip data rewriting device of one embodiment of the present disclosure.
FIG. 5 is an internal structural schematic diagram of a consumable chip data rewriting device of one embodiment of the present disclosure.
FIG. 6 is an internal structural schematic diagram of a consumable chip data rewriting device of another one embodiment of the present disclosure.

In the drawings: consumable fixing seat 1, sliding rail 2, detection trigger switch 3, display screen 4, main control box 5, boot button 6, power connector 7, data interface 8, probe 9, hinge 10, step motor 11, screw 12, box fastener 13, screw nut 14, base 15, solenoid valve 16, air cylinder 17, gas pipe 18, solenoid valve switch 19.

### DETAILED DESCRIPTION OF THE EMBODIMENT

References will now be made to the drawings to describe, in detail, various embodiments of the present disclosure. The scope of the invention is defined by the appended claims.

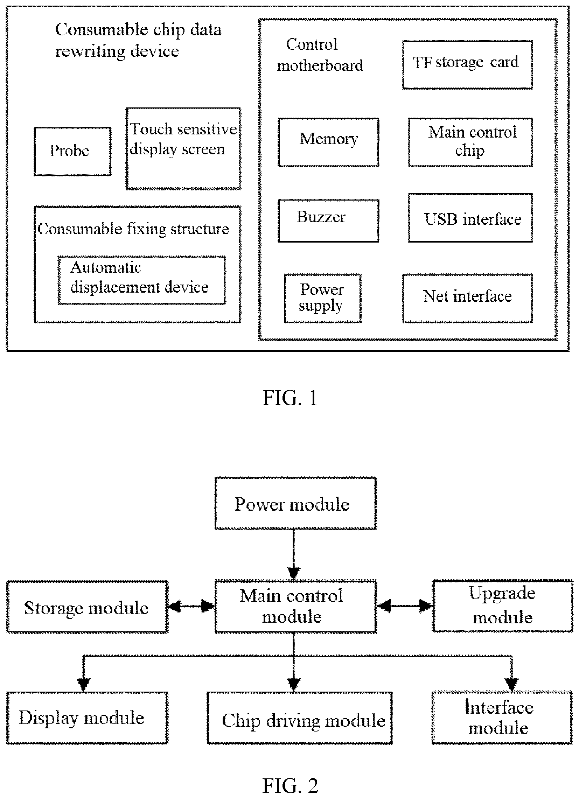

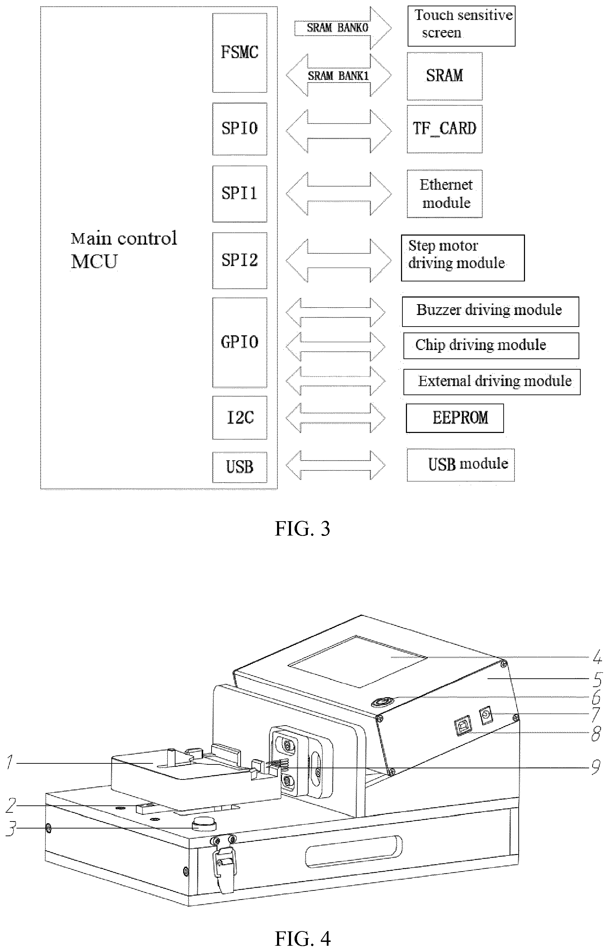

A consumable chip data rewriting device, as shown in FIGs. 1-3, including a main control box 5, a probe 9, and a consumable fixing structure; a display screen 4 is embedded in the main control box 5; the main control box 5 is internally provided with a main control module, a power module, a chip driving module, a display module, a storage module, an upgrade module, and an interface module; wherein, as shown in FIG. 3, the power module is used to supply power to the device, and the power module uses switching voltage regulator circuit and has a high conversion efficiency and high output power; the chip driving module is used to change the control circuit of the internal data of the consumable chip; the storage module is used to store the reproduced data and programs, including EEPROM, RAM, and TF card; the display module is used to display the current work status and the reset results of the device, and the display screen has a large touch sensitive screen so that the information type of the consumable in need of reset can be selected by directly touching the screen; the upgrade module is used to upgrade the program of the device, including USB interface, net interface; the interface module is used to realize the connection and communication between the main control module and the other modules, including the SPI interface, I2C interface, and FSMC interface; the main control module is used to receive and process the feedback data from the other modules, and send a control command. The main control module is respectively connected to and communicates with the power module, the chip driving module, the display module, the storage module, and the upgrade module via the interface module; the display screen is connected to the main control module via the display module; the power module supplies power to the main control module; the probe 9 is connected to the main control module via the chip driving module; the upgrade module and the main control module can perform two-way communication; the upgrade module is used to upgrade and rewrite the internal programs of the device; the storage module and the main control module can perform two-way communication; the storage module stores the data and internal programs of the rewriting device; the consumable fixing structure is used for fixing the consumables; the probe 9 touches the consumable chip; the main control module controls the chip driving module to perform data regenerating operation on the consumable chip.

In one embodiment, the consumable chip data rewriting device further includes a boot button 6, and a power connector 7; the power module is connected to an external power supply via the power connector 7; the boot button 6 is electrically connected to the power module; the boot button 6 controls the circuit between the power module and the main control module to be connected or broken. The external power supply includes commercial power or external storage battery.

In the main embodiment of the invention, as shown in FIG. 4, the consumable fixing structure includes a sliding rail 2, and a consumable fixing seat 1. The sliding rail 2 is installed on the base 15; the consumable fixing seat 1 and the sliding rail 2 are connected to each other in a sliding mode; the main control box 5 is connected to and fixed on the base 15. The consumable fixing seat 1 is configured to clamp the consumable, and the probe 9 can touch the consumable chip by sliding the consumable fixing seat 1.

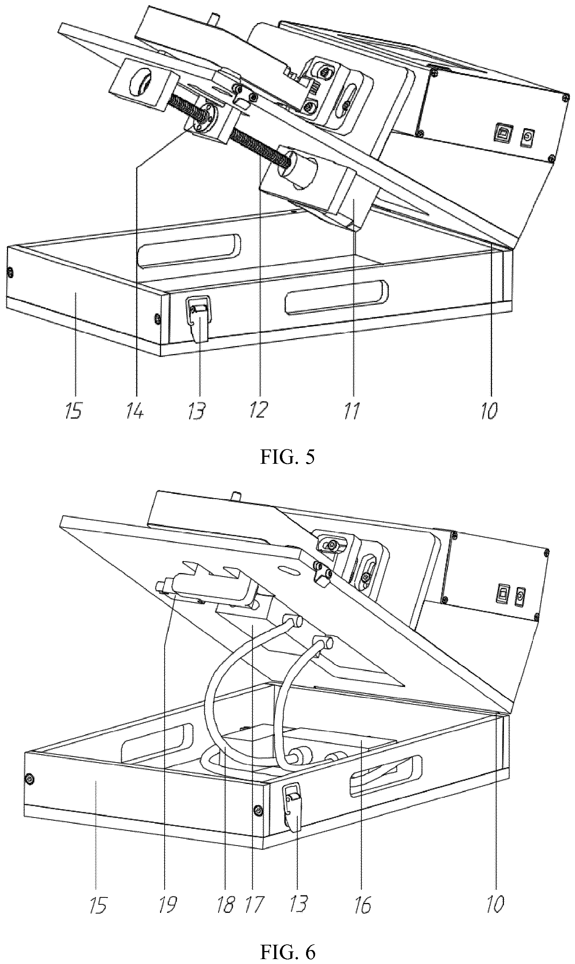

In the main embodiment of the invention, the consumable fixing structure further includes a fixing seat driving structure. The fixing seat driving structure is electrically connected to the power module; the fixing seat driving structure is configured to drive the consumable fixing seat 1 to slide along the sliding rail 2. As shown in FIG. 5, in one embodiment, the fixing seat driving structure includes a step motor 11, a screw 12, and a screw nut 14; the screw 12 is connected to the step motor 11; the screw nut 14 matches the screw 12; the screw nut 14 is connected to and fixed on the consumable fixing seat 1; the step motor 11 is configured to drive the consumable fixing seat 1 to slide along the sliding rail 2. As shown in FIG. 6, in another one embodiment, the fixing seat driving structure includes a solenoid valve 16, an air cylinder 17, a gas pipe 18, and a solenoid valve switch 19; the solenoid valve 16 and the solenoid valve switch 19 are electrically connected to the power module; one end of the pipe 18 is connected to the air cylinder 17, and the other end of the pipe 18 is connected to the solenoid valve switch 19; the movable part of the air cylinder 17 is connected to and fixed on the consumable fixing seat 1; the solenoid valve 16 controls the solenoid valve switch 19 to allow the gas get in or stop the gas getting in; the movable part of the air cylinder 17 drives the consumable fixing seat 1 to slide along the sliding rail 2. A detection trigger switch 3 is installed on the base 15 so that it is convenient to start the fixing seat driving structure; the detection trigger switch 3 is electrically connected to the fixing seat driving structure; the fixing seat driving structure can be started by pressing the detection trigger switch 3, so that the step motor 11 or the solenoid valve 16 is started.

As shown in FIGS. 4-6, the base 15 is a box-shaped structure; the fixing seat driving structure is installed in the box-shaped structure. As shown in FIG. 5, the step motor 11, the screw 12, and the screw nut 14 are installed in the box-shaped structure; as shown in FIG. 6, the solenoid valve 16, the air cylinder 17, the gas pipe 18, and the solenoid valve switch 19 are installed in the box-shaped structure; the base 15 includes a hinge 10 and a box fastener 13 so that it is convenient to open and close the box-shaped structure; the hinge 10 is configured for rotating the box-shaped structure in the process of opening the box-shaped structure, and the box fastener 13 is configured to fix the box-shaped structure in the process of closing the box-shaped structure.

As shown in FIG. 3, the interface module includes FSMC interface, SPI interface, GPIO interface, I2C interface, USB interface. The interface module is a software interface, in one embodiment, in the FSMC interface, the external memory is divided into four storage units with each storage unit has 256M byte. The storage unit 1 is used to visit at most four NOR flash memories or PSRAM memory, and this storage area is divided into four NOR/PSRAM areas and has four special chip selections. The storage units 2 and 3 are used to visit NAND flash memory, and each storage unit is connected to one flash memory; the storage unit 4 is used to visit PC card device, where the memory type of each storage unit is defined by the user in the process of selecting register, such as shown in FIG. 3, the touch screen and SRAM are respectively mounted on the BANK0 and BANK1 of storage unit 1. In one embodiment, as shown in FIG. 3, there are three SPI interfaces, where the SPI0 is used to connect the external extended storage, such as SD card, TF card, U disk, mobile hard disk; the SPI1 is used to connect an Ethernet module so that the consumable chip data rewriting device is connected to and communicates with the network; the SPI2 is used to connect a step motor driving module; after power-on initialization, the main control MCU first configures the subdivision step of the step motor driving module, then drives the step motor to rotate 8000 steps forward and synchronously collects the driving current of the motor; if the current reaches the preset threshold, it proves that the motor has reached the limit of forward motion, by then stops driving and the position of the step motor at this time is recorded as the initial value; then the main control MCU drives the step motor to reversely rotate 16000 steps; if the current reaches the preset threshold, it proves that the motor has reached the limit of reverse motion, by then the actual driving steps at this time are recorded as the full range of the motor rotation; in the following driving motor of each time, this steps of the full range of the motor rotation are used as the target value and written into the step motor driving module. The general purpose input output (GPIO) interface connect a buzzer driving module, a chip driving module, and an external driving module; and the external driving module includes a solenoid valve driving module.

In one embodiment, the consumable chip data rewriting device further includes a speaker, the speaker is connected to and communicates with the main control module via the GPIO interface; the speaker is a buzzer; the main control module controls the buzzer to produce sound. As shown in FIG. 3, in detail, when the main control module controls the chip driving module to perform a successful data regenerating operation on the consumable chip, the main control module controls buzzer driving module via the GPIO interface to drive the buzzer to produce a prompt tone once; when the data regenerating operation on the consumable chip fails, the main control module controls buzzer driving module via the GPIO interface to drive the buzzer to produce a continuous short prompt tone twice.

In one embodiment, as shown in FIG. 3, the storage module includes EEPROM, RAM, external extended storage; the EEPROM is connected to and communicates with the main control module via the I2C interface; the RAM is connected to and communicates with the main control module via the FSMC interface; the display screen 4 is a touch screen; the touch screen is connected to and communicates with the main control module via the FSMC interface. The RAM includes SRAM and DRAM

In one embodiment, the consumable chip data rewriting device further includes an extended storage slot; the extended storage slot is used to connect the external extended storage; the extended storage slot is connected to and communicates with the main control module via the SPI interface; the external extended storage includes SD card, TF card, U disk, mobile hard disk.

In one embodiment, the consumable chip data rewriting device further includes a data interface 8 so that it is convenient to remote upgrade the device; the data interface 8 is connected to and communicates with the main control module via the interface module. The master computer can upgrade the consumable chip data rewriting device through the data interface 8; and the upgrade content includes the user application program and user authorized documents of the consumable chip data rewriting device, and the regeneration and reset times are stored in the user authorized documents. In one embodiment, the data interface 8 is USB interface.

The data regenerating operation on the consumable chip is as following:
1) Powering on and booting the consumable chip data rewriting device;
2) The display screen 4 displays the data regenerating type (includes consumables model numbers, consumables color, and consumables capacity);
3) Placing the consumable in need of regeneration in the consumable fixing structure;
4) Selecting the data in need of regeneration from the information displayed on the display screen 4;
5) After confirmation, the fixing seat driving structure drives the consumable fixing structure to move, so that the consumable chip is touched by the probe 9;
6) The main control MCU writes the data in need of regeneration and selected in step 4 in the consumable chip;
7) After regenerating operation, the display screen 4 shows the regenerating operation results, if the regenerating operation is successful, "success" is shown and the buzzer is driven to produce a prompt tone once; if the regenerating operation fails, the failure reason is shown and the buzzer is driven to produce a continuous short prompt tone twice;
8) The fixing seat driving structure reset the position of the consumable fixing structure, and taking out the reset-finished regenerated toner cartridge.

The present disclosure relates to a consumable chip data rewriting device, including a main control box, a probe, and a consumable fixing structure; a display screen is embedded in the main control box; the main control box is internally provided with a main control module, a power module, a chip driving module, a display module, a storage module, an upgrade module, and an interface module; the main control module is respectively connected to and communicates with the power module, the chip driving module, the display module, the storage module and the upgrade module via the interface module; the display screen is connected to the main control module via the display module; the power module supplies power to the main control module; the probe is connected to the main control module via the chip driving module; the upgrade module and the main control module can perform two-way communication; the upgrade module is used to upgrade and rewrite the internal programs of the device; the storage module and the main control module can perform two-way communication; the storage module stores the data and internal programs of the rewriting device; the consumable fixing structure is used for fixing the consumables; the probe touches the consumable chip; the main control module controls the chip driving module to perform data regenerating operation on the consumable chip. The present disclosure realizes the regeneration and reset of the consumable chip, so that the waste of consumable chips is effectively avoided and the service life of chips is improved.

The scope of the invention is defined by the appended claims.

## Claims

1. A consumable chip data rewriting device for printing consumable chip devices, comprising: a main control box (5), a probe (9), and a consumable fixing structure,
wherein a display screen (4) is embedded in the main control box (5);
the main control box (5) is internally provided with a main control module, a power module, a chip driving module, a display module, a storage module, an upgrade module, and an interface module;
the main control module is respectively connected to and communicates with the power module, the chip driving module, the display module, the storage module, and the upgrade module via the interface module;
the display screen (4) is connected to the main control module via the display module;
the power module supplies power to the main control module;
the probe (9) is connected to the main control module via the chip driving module; the storage module and the main control module perform two-way communication, and the storage module stores the data and internal programs of the rewriting device;
the consumable fixing structure is configured for fixing the consumables; the probe (9) is able to touch the consumable chip, and the main control module is configured for controlling the chip driving module to perform data regenerating operation on the consumable chip with regeneration data, **characterized by**
the regeneration date comprises consumables model numbers, consumables color, and consumables capacity;
the consumable fixing structure comprises a sliding rail (2), a consumable fixing seat (1), and a fixing seat driving structure; the sliding rail (2) is installed on a base (15); the consumable fixing seat (1) and the sliding rail (2) are connected to each other in a sliding mode; and the main control box (5) is connected to and fixed on the base (15);
the fixing seat driving structure is electrically connected to the power module; and the fixing seat driving structure is configured to drive the consumable fixing seat (1) to slide along the sliding rail (2), and enable the consumable chip directly touch the probe (9);
the upgrade module and the main control module perform two-way communication,
the upgrade module is configured for upgrading and rewriting the internal programs of the device, and the internal programs of the device comprise an user application program and an user authorized documents configured for storing a regeneration and reset times.

2. The consumable chip data rewriting device of claim 1, wherein the display screen (4) is a touch sensitive display screen.

3. The consumable chip data rewriting device of claim 1, wherein a detection trigger switch (3) is installed on the base (15); the detection trigger switch (3) is electrically connected to the fixing seat driving structure; and the detection trigger switch (3) controls the fixing seat driving structure to be started.

4. The consumable chip data rewriting device of claim 1, wherein the fixing seat driving structure comprises a step motor (11), a screw (12), and a screw nut (14); the screw (12) is connected to the step motor (11); the screw nut (14) matches the screw (12); the screw nut (14) is connected to and fixed on the consumable fixing seat (1); and the step motor (11) is configured to drive the consumable fixing seat (1) to slide along the sliding rail (2).

5. The consumable chip data rewriting device of claim 1, wherein the fixing seat driving structure comprises a solenoid valve (16), an air cylinder (17), a gas pipe (18), and a solenoid valve switch (19); the solenoid valve (16) and the solenoid valve switch (19) are electrically connected to the power module; one end of the gas pipe (18) is connected to the air cylinder (17), and the other end of the gas pipe (18) is connected to the solenoid valve switch (19); the movable part of the air cylinder (17) is connected to and fixed on the consumable fixing seat (1); the solenoid valve (16) controls the solenoid valve switch (19) to allow the gas get in or stop the gas getting in; and the movable part of the air cylinder (17) drives the consumable fixing seat (1) to slide along the sliding rail (2).

6. The consumable chip data rewriting device of claim 1, wherein the base (15) is a box-shaped structure; the base (15) comprises a hinge (10) and a box fastener (13); and the fixing seat driving structure is installed in the box-shaped structure.

7. The consumable chip data rewriting device of claim 1, wherein the interface module comprises FSMC interface, SPI interface, GPIO interface, I2C interface, and USB interface.

8. The consumable chip data rewriting device of claim 7, further comprising a boot button (6), and a power connector (7); the power module is connected to an external power supply via the power connector (7); the boot button (6) is electrically connected to the power module; and the boot button (6) controls the circuit between the power module and the main control module to be connected or broken.

9. The consumable chip data rewriting device of claim 7, further comprising a speaker and an Ethernet module; the speaker is connected to and communicates with the main control module via the GPIO interface; the speaker is a buzzer; the main control module controls the buzzer to produce sound; and the Ethernet module is connected to and communicates with the main control module via the SPI interface.

10. The consumable chip data rewriting device of claim 7, wherein the storage module comprises EEPROM, RAM, external extended storage; the EEPROM is connected to and communicates with the main control module via the I2C interface; the RAM is connected to and communicates with the main control module via the FSMC interface; the display screen (4) is a touch screen; the touch screen is connected to and communicates with the main control module via the FSMC interface.

11. The consumable chip data rewriting device of claim 10, further comprising an extended storage slot; the extended storage slot is used to connect the external extended storage; the extended storage slot is connected to and communicates with the main control module via the SPI interface; and the external extended storage comprises SD card, TF card, U disk, and mobile hard disk.

## Patentansprüche

1. Vorrichtung zum Wiederbeschreiben von verbrauchbaren Chipdaten zum Drucken von verbrauchbaren Chipvorrichtungen, mit: einem Hauptsteuerungsgehäuse (5), einer Sonde (9) und einer Verbrauchsmaterialbefestigungsstruktur,
wobei ein Anzeigebildschirm (4) in das Hauptsteuergehäuse (5) eingebettet ist;
das Hauptsteuergehäuse (5) intern mit einem Hauptsteuermodul, einem Leistungsmodul, einem Chiptreibermodul, einem Anzeigemodul, einem Speichermodul, einem Aufrüstmodul und einem Schnittstellenmodul versehen ist;
das Hauptsteuermodul jeweils mit dem Leistungsmodul, dem Chip-Ansteuermodul, dem Anzeigemodul, dem Speichermodul und dem Aufrüstmodul verbunden ist und mit diesen über das Schnittstellenmodul kommuniziert;
der Anzeigebildschirm (4) über das Anzeigemodul mit dem Hauptsteuermodul verbunden ist;
das Leistungsmodul das Hauptsteuermodul mit Strom versorgt;
die Sonde (9) über das Chiptreibermodul mit dem Hauptsteuermodul verbunden ist; das Speichermodul und das Hauptsteuermodul eine Zweiwege-Kommunikation durch führen, und das Speichermodul die Daten und internen Programme der Umschreibungsvorrichtung speichert;
die Verbrauchsmaterialbefestigungsstruktur zum Befestigen des Verbrauchsmaterials konfiguriert ist; die Sonde (9) in der Lage ist, den Verbrauchsmaterialchip zu berühren, und das Hauptsteuermodul zum Steuern des Chipantriebsmoduls konfiguriert ist, um einen Datenregenerierungsvorgang auf dem Verbrauchsmaterialchip mit Regenerierungsdaten durchzuführen, **dadurch gekennzeichnet, dass** die Regenerierungsdaten die Modellnummern der Verbrauchsmaterialien, die Farbe der Verbrauchsmaterialien und die Kapazität der Verbrauchsmaterialien umfassen;
die Verbrauchsmaterialbefestigungsstruktur eine Gleitschiene (2), einen Verbrauchsmaterial-Befestigungssitz (1) und eine Befestigungssitz-Antriebsstruktur umfasst; wobei die Gleitschiene (2) auf einer Basis (15) installiert ist; der Verbrauchsmaterial-Befestigungssitz (1) und die Gleitschiene (2) in einem Gleitmodus miteinander verbunden sind; und das Hauptsteuergehäuse (5) mit der Basis (15) verbunden und daran befestigt ist;
die Fixiersitz-Antriebsstruktur elektrisch mit dem Leistungsmodul verbunden ist; und die Fixiersitz-Antriebsstruktur so konfiguriert ist, dass sie den Verbrauchsmaterial-Fixiersitz (1) so antreibt, dass er entlang der Gleitschiene (2) gleitet, und dass der Verbrauchsmaterial-Chip die Sonde (9) direkt berühren kann;
das Aufrüstmodul und das Hauptsteuermodul eine Zwei-Wege-Kommunikation durchführen,
das Aktualisierungsmodul zum Aktualisieren und Überschreiben der internen Programme der Vorrichtung konfiguriert ist, und die internen Programme der Vorrichtung ein Benutzeranwendungsprogramm und ein vom Benutzer autorisiertes Dokument umfassen, die zum Speichern einer Regenerations- und Rücksetzzeit konfiguriert sind.

2. Verbrauchbare Chip-Datenwiederbeschreibungsvorrichtung nach Anspruch 1, wobei der Anzeigebildschirm (4) ein berührungsempfindlicher Anzeigebildschirm ist.

3. Verbrauchbare Chip-Datenwiederbeschreibungsvorrichtung nach Anspruch 1, wobei ein Erfassungsauslöseschalter (3) auf der Basis (15) installiert ist; der Erfassungsauslöseschalter (3) elektrisch mit der Befestigungssitz-Antriebsstruktur verbunden ist; und der Erfassungsauslöseschalter (3) die zu startende Befestigungssitz-Antriebsstruktur steuert.

4. Verbrauchbare Chip-Datenwiederbeschreibungsvorrichtung nach Anspruch 1, wobei die Antriebsstruktur des Fixiersitzes einen Schrittmotor (11), eine Schraube (12) und eine Schraubenmutter (14) umfasst; die Schraube (12) mit dem Schrittmotor (11) verbunden ist; die Schraubenmutter (14) zu der Schraube (12) passt; die Schraubenmutter (14) mit dem verbrauchbaren Fixiersitz (1) verbunden und daran befestigt ist; und der Schrittmotor (11) so konfiguriert ist, dass er den verbrauchbaren Fixiersitz (1) so antreibt, dass er entlang der Gleitschiene (2) gleitet.

5. Verbrauchbare Chip-Datenwiederbeschreibungsvorrichtung nach Anspruch 1, wobei die Antriebsstruktur des Fixiersitzes ein Magnetventil (16), einen Luftzylinder (17), eine Gasleitung (18) und einen Magnetventilschalter (19) umfasst; wobei das Magnetventil (16) und der Magnetventilschalter (19) elektrisch mit dem Leistungsmodul verbunden sind; wobei ein Ende der Gasleitung (18) mit dem Luftzylinder (17) verbunden ist, und das andere Ende der Gasleitung (18) mit dem Magnetventilschalter (19) verbunden ist; der bewegliche Teil des Luftzylinders (17) mit dem Verbrauchsmaterial-Befestigungssitz (1) verbunden und an diesem befestigt ist; das Magnetventil (16) den Magnetventilschalter (19) steuert, um den Gaseintritt zu ermöglichen oder den Gaseintritt zu verhindern; und der bewegliche Teil des Luftzylinders (17) den Verbrauchsmaterial-Befestigungssitz (1) antreibt, um entlang der Gleitschiene (2) zu gleiten.

6. Verbrauchbare Chip-Datenwiederbeschreibungsvorrichtung nach Anspruch 1, wobei die Basis (15) eine kastenförmige Struktur ist; die Basis (15) ein Scharnier (10) und eine Kastenbefestigung (13) umfasst; und die Befestigungssitz-Antriebsstruktur in der kastenförmigen Struktur installiert ist.

7. Verbrauchbare Chip-Datenwiederbeschreibungsvorrichtung nach Anspruch 1, wobei das Schnittstellenmodul eine FSMC-Schnittstelle, eine SPI-Schnittstelle, eine GPIO-Schnittstelle, eine I2C-Schnittstelle und eine USB-Schnittstelle umfasst.

8. Verbrauchbare Chip-Datenwiederbeschreibungsvorrichtung nach Anspruch 7, die ferner einen Boot-Knopf (6) und einen Stromanschluss (7) umfasst; wobei das Strommodul über den Stromanschluss (7) mit einer externen Stromversorgung verbunden ist; der Boot-Knopf (6) elektrisch mit dem Strommodul verbunden ist; und der Boot-Knopf (6) die Schaltung zwischen dem Strommodul und dem Hauptsteuermodul steuert, die verbunden oder unterbrochen werden soll.

9. Verbrauchbare Chip-Datenwiederbeschreibungsvorrichtung nach Anspruch 7 ferner umfassend einen Lautsprecher und ein Ethernet-Modul; wobei der Lautsprecher mit dem Hauptsteuermodul verbunden ist und mit diesem über die GPIO-Schnittstelle kommuniziert; wobei der Lautsprecher ein Summer ist; das Hauptsteuermodul den Summer steuert, um einen Ton zu erzeugen; und das Ethernet-Modul mit dem Hauptsteuermodul verbunden ist und mit diesem über die SPI-Schnittstelle kommuniziert.

10. Verbrauchbare Chip-Datenwiederbeschreibungsvorrichtung nach Anspruch 7, wobei das Speichermodul EEPROM, RAM, externen erweiterten Speicher umfasst; wobei das EEPROM mit dem Hauptsteuermodul über die I2C-Schnittstelle verbunden ist und mit diesem kommuniziert; das RAM mit dem Hauptsteuermodul über die FSMC-Schnittstelle verbunden ist und mit diesem kommuniziert; der Anzeigebildschirm (4) ein Touchscreen ist; der Touchscreen mit dem Hauptsteuermodul über die FSMC-Schnittstelle verbunden ist und mit diesem kommuniziert.

11. Verbrauchbare Chip-Datenwiederbeschreibungsvorrichtung nach Anspruch 10, die ferner einen Erweiterungsspeicherschlitz umfasst; wobei der Erweiterungsspeicherschlitz verwendet wird, um den externen Erweiterungsspeicher anzuschließen; wobei der Erweiterungsspeicherschlitz mit dem Hauptsteuermodul verbunden ist und mit diesem über die SPI-Schnittstelle kommuniziert; und der externe Erweiterungsspeicher SD-Karte, TF-Karte, U-Diskette und mobile Festplatte umfasst.

## Revendications

1. Dispositif de réécriture de données de puces consommables pour imprimer des puces consommables, comprenant : un boîtier de commande principal (5), une sonde (9), et une structure de fixation de consommables,
dans lequel un écran d'affichage (4) est intégré dans le boîtier de commande principal (5) ;
le boîtier de commande principal (5) est doté en interne d'un module de commande principal, d'un module d'alimentation, d'un module de commande de puce, d'un module d'affichage, d'un module de stockage, d'un module de mise à jour et d'un module d'interface ;
le module de commande principal est respectivement connecté au module d'alimentation, au module de commande de puce, au module d'affichage, au module de stockage et au module de mise à jour et communique avec eux via le module d'interface ;
l'écran d'affichage (4) est connecté au module de commande principal via le module d'affichage ;
le module d'alimentation fournit de l'énergie au module de commande principal ; la sonde (9) est connectée au module de commande principal via le module de pilotage de puce ;
le module de stockage et le module de commande principal effectuent une communication bidirectionnelle, et le module de stockage stocke les données et les programmes internes du dispositif de réécriture ;
la structure de fixation des consommables est configurée pour fixer les consommables ; la sonde (9) est capable de toucher la puce consommable, et le module de commande principal est configuré pour commander le module d'entraînement de la puce pour effectuer une opération de régénération des données sur la puce consommable avec des données de régénération, **caractérisé en ce que**
les données de régénération comprennent les numéros de modèle des consommables, la couleur des consommables et la capacité des consommables ;
la structure de fixation de consommable comprend un rail coulissant (2), un siège de fixation de consommable (1), et une structure d'entraînement du siège de fixation ; le rail coulissant (2) est installé sur une base (15) ; le siège de fixation de consommable (1) et le rail coulissant (2) sont connectés l'un à l'autre dans un mode coulissant ; et le boîtier de commande principal (5) est connecté à et fixé sur la base (15) ;
la structure d'entraînement du siège de fixation est connectée électriquement au module d'alimentation ; et la structure d'entraînement du siège de fixation est configurée pour entraîner le siège de fixation de consommable (1) afin qu'il glisse le long du rail coulissant (2), et pour permettre à la puce de consommable de toucher directement la sonde (9) ;
le module de mise à jour et le module de commande principal effectuent une communication bidirectionnelle,
le module de mise à jour est configuré pour mettre à jour et réécrire les programmes internes du dispositif, et les programmes internes du dispositif comprennent un programme d'application utilisateur et des documents autorisés par l'utilisateur configurés pour stocker une régénération et des temps de réinitialisation.

2. Le dispositif de réécriture de données de puce consommable selon la revendication 1, dans lequel l'écran d'affichage (4) est un écran d'affichage tactile.

3. Le dispositif de réécriture de données de puces consommables selon la revendication 1, dans lequel un commutateur de déclenchement de détection (3) est installé sur la base (15) ; le commutateur de déclenchement de détection (3) est électriquement connecté à la structure d'entraînement du siège de fixation ; et le commutateur de déclenchement de détection (3) commande le démarrage de la structure d'entraînement du siège de fixation.

4. Le dispositif de réécriture de données de puce consommable selon la revendication 1, dans lequel la structure d'entraînement de siège de fixation comprend un moteur pas à pas (11), une vis (12) et un écrou de vis (14) ; la vis (12) est connectée au moteur pas à pas (11) ; l'écrou de vis (14) s'adapte à la vis (12) ; l'écrou de vis (14) est connecté à et fixé sur le siège de fixation consommable (1) ; et le moteur pas à pas (11) est configuré pour entraîner le siège de fixation consommable (1) à glisser le long du rail de glissement (2).

5. Le dispositif de réécriture de données de puce consommable selon la revendication 1, dans lequel la structure d'entraînement du siège de fixation comprend une électrovanne (16), un cylindre d'air (17), un tuyau de gaz (18) et un commutateur d'électrovanne (19) ; l'électrovanne (16) et le commutateur d'électrovanne (19) sont connectés électriquement au module de puissance ; une extrémité du tuyau de gaz (18) est connectée au cylindre d'air (17), et l'autre extrémité du tuyau de gaz (18) est connectée au commutateur d'électrovanne (19) ; la partie mobile de la bouteille d'air (17) est connectée et fixée sur le siège de fixation consommable (1) ; l'électrovanne (16) commande le commutateur d'électrovanne (19) pour permettre au gaz d'entrer ou d'arrêter l'entrée du gaz ; et la partie mobile de la bouteille d'air (17) entraîne le siège de fixation consommable (1) à glisser le long du rail de glissement (2).

6. Le dispositif de réécriture de données de puce consommable selon la revendication 1, dans lequel la base (15) est une structure en forme de boîte ; la base (15) comprend une charnière (10) et une attache de boîte (13) ; et la structure d'entraînement du siège de fixation est installée dans la structure en forme de boîte.

7. Le dispositif de réécriture de données de puce consommable de la revendication 1, dans lequel le module d'interface comprend une interface FSMC, une interface SPI, une interface GPIO, une interface I2C et une interface USB.

8. Le dispositif de réécriture de données de puce consommable de la revendication 7, comprenant en outre un bouton d'amorçage (6), et un connecteur d'alimentation (7) ; le module d'alimentation est connecté à une alimentation externe via le connecteur d'alimentation (7) ; le bouton d'amorçage (6) est électriquement connecté au module d'alimentation ; et le bouton d'amorçage (6) commande le circuit entre le module d'alimentation et le module de commande principal pour être connecté ou interrompu.

9. Le dispositif de réécriture de données de puce consommable de la revendication 7, comprenant en outre un haut-parleur et un module Ethernet ; le haut-parleur est connecté au module de commande principal et communique avec celui-ci via l'interface GPIO ; le haut-parleur est un buzzer ; le module de commande principal commande le buzzer pour produire un son ; et le module Ethernet est connecté au module de commande principal et communique avec celui-ci via l'interface SPI.

10. Le dispositif de réécriture de données de puce consommable selon la revendication 7, dans lequel le module de stockage comprend une EEPROM, une RAM, un stockage étendu externe ; l'EEPROM est connectée au module de commande principal et communique avec lui via l'interface I2C ; la RAM est connectée au module de commande principal et communique avec lui via l'interface FSMC ; l'écran d'affichage (4) est un écran tactile ; l'écran tactile est connecté au module de commande principal et communique avec lui via l'interface FSMC.

11. Le dispositif de réécriture de données de puce consommable selon la revendication 10, comprenant en outre un emplacement de stockage étendu ; l'emplacement de stockage étendu est utilisé pour connecter le stockage étendu externe ; l'emplacement de stockage étendu est connecté au module de commande principal et communique avec celui-ci via l'interface SPI ; et le stockage étendu externe comprend une carte SD, une carte TF, un disque U et un disque dur mobile.
